Europäisches Patentamt

European Patent Office

Office européen des brevets

(19)

(11) Publication number: **0 152 222 B1**

(12) **EUROPEAN PATENT SPECIFICATION**

(45) Date of publication of patent specification: **12.06.91**  (51) Int. Cl.5: **H02K 41/025, H02K 3/28**

(21) Application number: **85300565.0**

(22) Date of filing: **28.01.85**

(54) Linear motor.

(30) Priority: **26.01.84 JP 12967/84**
**26.01.84 JP 12968/84**

(43) Date of publication of application:
**21.08.85 Bulletin 85/34**

(45) Publication of the grant of the patent:
**12.06.91 Bulletin 91/24**

(84) Designated Contracting States:
**DE FR GB**

(56) References cited:
**DE-A- 1 963 868**
**DE-A- 3 202 958**
**US-A- 2 648 807**

**ELEKTRIE, vol. 24, no. 10, October 1970,
pages 335-340, Berlin; P.-K. BUDIG
"Wanderfeld-Linearmotoren"**

**ELEKTROTECHNIK UND MASCHINENBAU,
vol. 89, no. 2, 1972, pages 60-69; E. RUMMICH
"Linearmotoren und ihre Anwendung"**

(73) Proprietor: **MITSUBISHI DENKI KABUSHIKI
KAISHA
2-3, Marunouchi 2-chome Chiyoda-ku
Tokyo 100(JP)**

(72) Inventor: **Kawamura, Mitsuhiro
11-11, Hanaoka-machi
City of Nagasaki Nagasaki Prefecture(JP)**
Inventor: **Fukumoto, Kikuo
464-35, Yoshimukugo Nagayo-cho
Nishisonogi County Nagasaki Prefecture(JP)**

(74) Representative: **Lawson, David Glynne et al
MARKS & CLERK 57-60 Lincoln's Inn Fields
London WC2A 3LS(GB)**

## Description

This invention relates to a linear motor constructed into a mode that a corresponding electric rotary machine is split and developed.

There are known linear motors of the type constructed in such a manner that in a corresponding two-pole three-phase full pitch double layer type electric rotary machine with 60° phase belts, three double layer wound phase belts belonging to three phases U, V and W respectively and corresponding to one pole are split into top and bottom coil sides as well as the respective split phase belts for the bottom and top coil sides belonging to the phases U and W are split from respective phase belts for the bottom and top coil sides belonging to the phases W and U and corresponding to the other pole to be continuous to the same and then the split phase belts are developed into a linear form with the remaining unsplit double layer wound phase belts to form a primary winding of the linear motor.

The resulting primary winding has included three single layer wound phase belts on each of the end portions thereof belonging to the three phases U, V and W respectively and corresponding to the one pole and three double layer wound phase belts on an intermediate portion thereof belonging to the three phases U, V and W respectively and corresponding to the other pole so as to be sandwiched between the single layer wound phase belts belonging to the phases W and U and corresponding to the are pole.

Also the coil side as initially called "top" or "bottom" disposed in each of slots included in the single layer wound phase belt belonging to each phases and located on each of the end portions of the linear winding is connected to the bottom or top coil side disclosed in each of slots included in the phase belt belonging to the same phase and located on the intermediate portion thereof to form a diamond-shaped coil.

This is because the two-pole three-phase full pitch double layer type electric rotary machine has been split and developed as described above.

The linear motor constructed as described above has a three-phase sinusoidal alternating current flowing through the primary winding including a plurality of the diamond-shaped coils.

At a time point when an instantaneous magnitude of a V-phase current is zero, a U and a W-phase current are equal in magnitude and opposite in sense to each other. Under these circumstances the phase belts forming the winding has an instantaneous distribution such that the phase belts disposed on each of the end portions are small in current magnitudes and the phase belts disposed on the intermediate portion are large in current magnitude.

Thus a magnetomotive force distribution formed by integrating the instantaneous current distribution as described above is considerably distorted as compared with a two pole sinusoidal wave.

This has resulted in the disadvantage that the thrust characteristic concerning a secondary stationary electrical conductor is not good.

The publication "Elektrie", Volume 24 No. 10, October 1970 pages 335 to 340, describes a linear motor with a phase belt split circumferentially, so that at one end of the linear motor there is a first complete winding layer, and at the other end there is a further complete winding layer, respectively corresponding to different layers. The effect of this on the thrust characteristics is not described, and furthermore, the described coil winding arrangement is bulky.

Accordingly, it is an object of the present invention to provide a new and improved linear motor of improved thrust characteristic and compact design.

This invention provides a linear electric motor having a winding configuration corresponding to a three-phase full pitch type electric rotary machine, having double layer wound phase belts (u, v, w) without overlap, split and developed into a linear form, characterised in that the linear motor includes a primary winding constructed so that, in the phase belt array of the corresponding electric rotary machine, one phase belt belonging to a selected one of three phases (U, V, W) is radially split so as to be circumferentially halved, thereby providing one double layered half of a phase belt (V) at each end of the linear motor.

The present invention will become more easily apparent from the following detailed description taken in conjunction with the accompanying drawings in which:

Figure 1A is a schematic diagram of an electric rotary machine on which a linear motor is based, illustrated in the form of phase belts;

Figure 1B in a diagram similar to Figure 1A but illustrating a conventional manner in which the phase belts shown in Figure 1A are split for the purpose of forming a primary winding of a linear motor;

Figure 1C is a Schematic diagram of the partially split arrangement as shown in Figure 1B developed to form the primary winding of the linear motor;

Figure 2 is a schematic wiring diagram of coils disposed in the arrangement shown in Figure 1C;

Figure 3 is graphs illustrating waveforms of current flowing respectively through three phases of a primary winding of a three phase linear motor;

Figure 4A is a graph of an instantaneous current distribution on the arrangement shown in Figure 1C or Figure 2 and flowed with the three phase current waveforms illustrated in Figure 3 at a time point T also shown in Figure 3;

Figure 4B is a graph of a magnetomotive force distribution resulting from the instantaneous current distribution shown in Figure 4A;

Figure 5A is a schematic diagram illustrating a manner in which the arrangement shown in Figure 1A is split for the purpose of forming one embodiment according to the linear motor of the present invention;

Figure 5B is a schematic diagram of the split arrangement as shown in Figure 5A developed to form the one embodiment of the present invention;

Figure 6A is a schematic diagram of an instantaneous current distribution on the arrangement shown in Figure 5B when the three phase current waveforms illustrated in Figure 3 flow therethrough with a V-phase current having an instantaneous current of a zero magnitude;

Figure 6B is a schematic diagram of a magnetmotive force distribution resulting from the instantaneous current distribution shown in Figure 6A;

Throughout in Figures like reference numerals and characters designate the identical or corresponding components.

## DESCRIPTION OF THE PREFERRED EMBODIMENTS

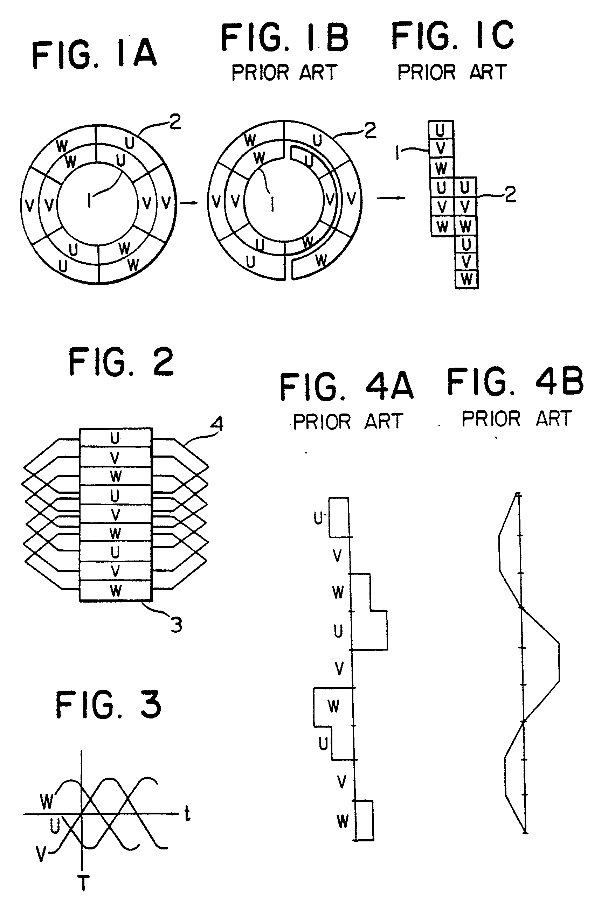

For a better understanding of the nature of the present invention, a conventional linear motor constructed on the basis of a three-phase electric rotary machine will now be described in conjunction with Figure 1 of the drawings. Figure 1A shows in the form of a circular phase belt array a two-pole three-phase full-pitch type electric rotary machine on the basis of which a linear motor is constructed. The arrangement illustrated comprises six pairs of radially superposed phase belts U, V and W having equal phase belt spans of 60° arranged in a circle to form a circular phase belt array. The radially inner phase belts U, V and W designated by the reference numeral 1 represent top coil sides included in the same respectively while the radially outer phase belts U, V and W designated by the reference numeral 2 represent bottom coil sides included in the same respectively.

Futhermore the three pairs of radially superposed phase belts U, V and W belong to the phases U, V and W of the system respectively while those located in a righthand half as reviewed in Figure 1A of the circle correspond to one pole and those located in a lefthand half thereof correspond to the other pole.

In order to construct a primary winding of a linear motor, the arrangement of Figures 1A has been previously split as shown in Figure 1B. As shown in Figure 1B, the phase belt U for the top coil sides belonging to the phase U and corresponding to the one pole is radially split from the adjacent phase belt W belonging to the phase W and corresponding to the other pole, and the phase belts U, V and W corresponding to the one pole and circumferentially split into the top and bottom coil sides until the phase belt W belonging to the phase W and corresponding to the one pole is radially split from the adjacent phase belt U belonging to the phase U and corresponding to the other pole.

Subsequently, the phase belt array is developed so that the phase belts U, V and W for the top coil sides and those for the bottom coil sides are developed into a linear form with the radially superposed phase belts U, V and W corresponding to the other pole.

Figure 1C shows the resulting structure which illustrates a conventional primary winding of a linear motor. As shown in Figure 1C, the single layer wound phase belts U, V and W circumferentially split from each other are located on both end portions of the linear structure respectively and the double layers wound phase belts U, V and W are put on the intermediate portion thereof with the respective phase belts U and W for the top and bottom coil sides forming both ends of the linear structure.

From the usual connection of coil sides included in the arrangement of Figure 1A and well known in the art it will readily be seen that coil sides included in each phase belt are connected to those included in the spaced phase belt belonging to the same phase as shown in Figure 2. It is noted in Figure 2, that although a plurality of coil sides are included in each phase belt, the connection of the coil sides is shown by a single line for each phase belt only for purposes of illustration.

More specifically, a single coil side located in each of integral slots (not shown) disposed on a primary linear core 3 and included in each of the phase belts located on either of the end portions thereof is connected via a diamond end construction of a bottom or top coil side disposed in a correspondings slot included in that phase belt belonging to the same phase as the firstmentioned phase belt, in accordance with whether the single coil side has be initially called "top" or "bottom".

For example, the coil side included in the phase belt U located on the end of the primary case 3 is connected to a corresponding bottom coils side included in the phase belt U located on the intermediate portion. This is because that single coil side has been initially called "top".

Thus a plurality of diamond shaped coils 4 are electromagnetically coupled to the primary linear core 3.

Therefore it will reapidly be understood that the coils 4 can be easily prepared.

In Figure 3 wherein the axis of ordinates represents an amplitude of accurent and the axis of abscissas represents time, there is shown a U, a V- and a W-phase sinusoidal alternating current flowing through the primary winding of three phase linear motors such as the arrangement illustrated in Figures 1C or 2. In Figure 3 a time point T is also shown at which the V-phase current has a null instantaneous magnitude while the U and W phase currents are equal in instantaneous magnitude and opposite in sense to each object.

At that time point T, therefore, the arrangement shown in Figure 1C or 2 has an instantaneous current distribution shown in Figure 4A wherein the axis of ordinates represents a position of the phase belt and the axis of abscissas represents an amplitude of the current.
The position of the phase bell is measured along the linear core 3 shown in Figure 2 or a linear array of the phase belts shown in Figure 1C starting with the upper end thereof as viewed in Figure 2 or Figure 1C.

From Figure 4A it is seen that the instantaneous current distribution has an amplitude small on each of the end portions and large on the intermediate portion as will readily be understood from the wiring of the coils shown in Figure 2.

It is well known that the instantaneous current distribution can be integrated into a magnetomotive force distribution.

Figure 4B shows a magnetomotive force distribution resulting from the instantaneous current distribution illustrated in Figure 4A. In Figure 4B the axis of ordinates has the same meaning as that shown in Figure 4A and the axis of abscissas represents an amplitude of the magnetomotive force.

It is seen in Figure 4B that the magnetomotive force is considerably distorted as compared with a two pole sinusoidal wave distribution. This has resulted in the disadvantage that the thrust characteristic concerning associated secondary stationary electrical conductor is not good.

The present invention contemplates to eliminate the disadvantage of the prior art practice as described above by changing the manner in which the arrangement of Figure 1A is split.

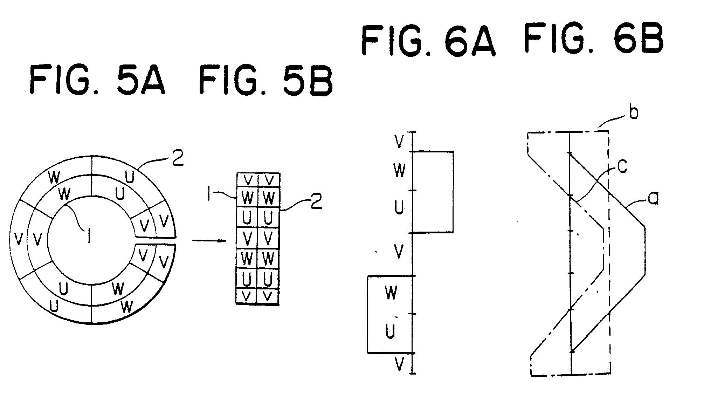

According to the present invention, one phase belt belonging to any selected one of the three phases of the system in the circular phase belt array of Figure 1A is radially split so as to be circumferentially halved as shown in Figure 5A.

Following this the phase belt array thus split is developed into linear form.

The resulting structure is shown in Figure 5B.

The linear phase belt array shown in Figure 5B is of the double layer type and also is required to be formed of a plurality of different types of coils.

When the linear phase belt array shown in Figure 5B carries the three-phase currents as illustrated in Figure 3, the array at the time point T in Figure 2 has an instantaneous current distribution as shown in Figure 6A wherein the axes of ordinates and abscissas are the same in meaning as those shown in Figure 4A. As shown in Figure 6A the phase belts W and U following the halved phase belt V at the upper end as viewed in Figure 6A of the linear array have respective instantaneous currents therethrough equal in magnitude and sense to each other while being equal in magnitude and opposite in sense of an instantaneous current through end of the phase belts W and U followed by the halved phase belt V at the lower end thereof.

The corresponding magnetomotive force distribution is shown at solid line a in Figure 6B wherein the axes of ordinates and abscisas are identical in meaning to those shown in Figure 4B. The magnetomotive force distribution lies only on the positive side of the axis of ordinates. A magnetomotive force waveform very close to a two-pole sinusoidal waveform can be provided as shown at dotted and dashed line c in Figure 6B by removing a rectangular waveform $\bar{b}$ extending throughout the entire length of the linear phase belt away as shown at dotted line b in Figure 6B. Since a magnetomotive force in the rectangular waveform b can be interpreted as an AC magnetomotive force, the same does not affect the thrust characteristic of a secondary stationary electrical conductor. Thus the secondary stationary electrical conductor is applied with a travelling magnetomotive force having a waveform very close to the two pole sinusoidal waveform. This results in an excellent thrust characteristic.

The present invention has been described in conjunction with the two-pole electric rotary machine, but it is to be understood that the present invention is equally applicable to three-phase full pitch electric rotary machines having four or more poles with the result somewhat inferior to that exhibited by the two pole machine.

## Claims

1. A linear electric motor having a winding configuration corresponding to a three-phase full pitch type electric rotary machine, having double layer wound phase belts (u, v, w) without overlap, split and developed into a linear form, characterised in that the linear motor includes a primary winding constructed so that, in the phase belt array of the corresponding electric rotary machine, one phase belt belonging to a selected one of three phases (U, V, W) is radially split so as to be circumferentially halved, thereby providing one double layered half of a phase belt (V) at each end of the linear motor.

2. A linear motor as claimed in claim 1 characerised in that the primary winding is of a two-pole three-phase type.

**Revendications**

1. Moteur électrique linéaire ayant une configuration d'enroulements correspondant à une machine électrique rotative du type à pas complet et à trois phases ayant des courroies de phase enroulées en couche double (u, v, w) sans recouvrement, séparées et développées en une forme linéaire, caractérisé en ce que le moteur linéaire comprend un enroulement primaire construit de manière que dans l'agencement des courroies de phase de la machine électrique rotative correspondante, une courroie de phase appartenant à l'une des trois phases (U, V, W) soit radialement séparée afin d'être circonférentiellement coupée en deux, pour ainsi former une moitié en couche double d'une courroie de phase (V) à chaque extrémité du moteur linéaire.

2. Moteur linéaire selon la revendication 1 caractérisé en ce que l'enroulement primaire est d'un type triphasé bipolaire.

**Ansprüche**

1. Elektrischer Linearmotor mit einer Wicklungskonfiguration entsprechend einer rotierenden Drehstrommaschine vom Durchmesserwicklungstyp mit zweilagig gewickelten Wicklungszonen (u, v, w) ohne Überlappung, geteilt und in eine Linearform abgewickelt, dadurch gekennzeichnet, daß der Linearmotor eine Primärwicklung aufweist, die so ausgebildet ist, daß in der Wicklungszonenanordnung der entsprechenden rotierenden elektrischen Maschine eine Wicklungszone, die zu einer ausgewählten Phase von den drei Phasen (U, V, W) gehört, radial so geteilt ist, daß sie umfangsmäßig halbiert ist, so daß dadurch an jedem Ende des Linearmotors eine doppellagige Hälfte einer Wicklungszone (V) gebildet wird.

2. Linearmotor nach Anspruch 1, dadurch gekennzeichnet, daß die Primärwicklung vom zweipoligen Dreiphasentyp ist.

# FIG. 1A

# FIG. 1B
## PRIOR ART

# FIG. 1C
## PRIOR ART

# FIG. 2

# FIG. 3

# FIG. 4A
## PRIOR ART

# FIG. 4B
## PRIOR ART

# FIG. 5A  FIG. 5B     FIG. 6A  FIG. 6B